# FASCICULE DE BREVET EUROPEEN

(11) **EP 4 313 635 B1**
(45) Date de publication et mention de la délivrance du brevet: **14.01.2026**
(21) Numéro de dépôt: 22717234.3
(22) Date de dépôt: 28.03.2022
(51) Int. Cl.: B60C 13/00, B60C 19/00

(54) **PNEUMATIQUE POUR BUS URBAIN COMPRENANT UN INDICATEUR D'USURE DE FLANC À VISIBILITÉ AMÉLIORÉE**
REIFEN FÜR EINEN STADTBUS MIT SEITENWANDVERSCHLEISSANZEIGE MIT BESSERER SICHTBARKEIT
TYRE FOR AN URBAN BUS COMPRISING A SIDEWALL WEAR INDICATOR EXHIBITING BETTER VISIBILITY

(30) Priorité: 31.03.2021 FR 2103322
(43) Date de publication de la demande: 07.02.2024
(73) Titulaire: COMPAGNIE GENERALE DES ETABLISSEMENTS MICHELIN, 63000 Clermont-Ferrand (FR)
(72) Inventeur: DOMPROBST, Frédéric, 63040 CLERMONT-FERRAND Cedex 9 (FR); LACOSTE, Paul, 63040 CLERMONT-FERRAND Cedex 9 (FR)
(74) Mandataire: M.F.P. Michelin
(86) Numéro de dépôt international: PCT/FR2022/050570
(87) Numéro de publication internationale: WO 2022/208010

(56) Documents cités:
- EP-A1- 3 261 858
- WO-A1-2011/036061
- CN-Y- 201 380 726
- DE-A1- 102018 211 248
- JP-A- H04 129 808
- KR-B1- 101 981 887

## Description

La présente invention a pour objet un pneumatique pour un véhicule lourd à usage urbain, plus particulièrement un bus urbain, et concerne un flanc d'un tel pneumatique.

De façon générale un pneumatique comprend deux flancs qui sont deux portions latérales reliant une bande de roulement respectivement à deux bourrelets. La bande de roulement est positionnée à la circonférence du pneumatique et destinée à être usée au cours du roulage du pneumatique. Les bourrelets sont destinés à assurer le montage du pneumatique sur une jante.

Plus précisément un flanc comprend usuellement, de l'extérieur vers l'intérieur du pneumatique, au moins une couche extérieure de matière caoutchoutique, en contact avec l'air atmosphérique et comprenant généralement, sur une face extérieure, un ensemble de marquages en creux ou en relief, une armature de carcasse comprenant au moins une couche de renforts métalliques ou textiles enrobés dans un matériau caoutchoutique, et au moins une couche intérieure de matière caoutchoutique, destinée à être au contact avec le gaz de gonflage lorsque le pneumatique est monté et gonflé sur sa jante.

Il est connu que les pneumatiques pour bus urbain ont la particularité d'avoir des flancs épais, c'est-à-dire des flancs comprenant une couche extérieure de matière caoutchoutique ayant une épaisseur suffisante pour permettre une certaine abrasion de cette dernière avant que l'armature de carcasse soit exposée à des râpages contre les trottoirs. En effet, les flancs d'un pneumatique de bus urbain sont régulièrement soumis à des frottements contre les trottoirs au cours des manœuvres d'arrêt et de démarrage du bus. Ces frottements génèrent une abrasion de la couche extérieure de flanc, puis, lorsque celle-ci est totalement usée, une dégradation de l'armature de carcasse susceptible d'aboutir à sa rupture par éclatement, ce qui est préjudiciable à la sécurité des personnes présentes à proximité du bus urbain. Par conséquent, il est primordial de pouvoir estimer l'épaisseur résiduelle de couche extérieure de flanc au cours de l'usage du pneumatique pour décider soit du retournement du pneumatique sur sa jante, pour exposer l'autre flanc, soit de son remplacement.

L'estimation de l'épaisseur résiduelle de couche extérieure de flanc à une date donnée est le plus souvent réalisée à l'aide d'une inspection visuelle du flanc destinée à évaluer la présence ou l'absence d'au moins un indicateur d'usure, formé dans le flanc. Un indicateur d'usure est généralement une cavité creusée dans la couche extérieure de flanc, à partir d'une face extérieure de flanc, cette cavité pouvant être de forme variable. Divers modes de réalisation d'un tel indicateur d'usure ont été décrits, à titre d'exemples, dans les documents KR 101981887B1, EP 3251958B1, JP 2014180904A, WO 2013118657A1, CN 201380726, JP 2003200717A et EP 0726173B1. D'aures documents, tels que DE 10 2018 211248 A1, EP 3261858 A1 et JP H04 129808 A, donnent également un enseignement technique sur des indicateurs d'usure.

Toutefois l'inspection visuelle d'un indicateur d'usure n'est pas toujours aisée du fait d'un contraste visuel insuffisant entre l'indicateur d'usure et la portion de flanc qui l'entoure, en particulier dans le cas d'une inspection visuelle directe à l'œil nu. Par conséquent la présence ou l'absence d'un indicateur d'usure résulte souvent d'une appréciation subjective de l'observateur.

Aussi les inventeurs se sont donnés pour objectif, pour un pneumatique pour véhicule lourd, en particulier pour bus urbain, comprenant au moins un indicateur d'usure de flanc, d'améliorer la visibilité de l'indicateur d'usure de flanc, et de permettre une corrélation aisée entre l'observation de l'indicateur d'usure et l'épaisseur résiduelle de la couche extérieure de flanc.

Cet objectif a été atteint par un pneumatique pour véhicule lourd à usage urbain comprenant deux flancs reliant une bande de roulement, destinée à entrer en contact avec un sol, respectivement à deux bourrelets, destinés à entrer en contact avec une jante,
- au moins un flanc comprenant, sur une face extérieure de flanc en contact avec l'air atmosphérique, au moins un indicateur d'usure en creux par rapport à la face extérieure de flanc,
- tout indicateur d'usure ayant une section débouchante sur la face extérieure de flanc contenant un cercle inscrit dont le diamètre décroît continûment avec l'usure du flanc,
- tout indicateur d'usure ayant une paroi intérieure non lisse, comprenant une répartition d'éléments en relief ou en creux par rapport à la paroi intérieure, et/ou une texture en relief par rapport à la paroi intérieure, de telle sorte que ladite paroi intérieure fait contraste visuellement avec la face extérieure de flanc,
- les éléments en relief ou en creux par rapport à la paroi intérieure étant des stries,
- et les stries en relief ou en creux par rapport à la paroi intérieure étant réparties radialement selon un pas permettant de déterminer la profondeur résiduelle de l'indicateur d'usure à un niveau d'usure du flanc donné.

Pour un pneumatique destiné à équiper un véhicule lourd à usage urbain, tel qu'un bus urbain, l'invention propose de façon essentielle de pourvoir au moins un de ses flancs, susceptible d'entrer en contact avec un trottoir, d'au moins un indicateur d'usure comprenant une surface débouchante contenant un cercle inscrit dont le diamètre diminue continûment avec l'usure du flanc. Par cercle inscrit on entend un cercle tangent intérieurement au contour de la surface débouchante. Le diamètre du cercle, c'est-à-dire la portion de section débouchante qu'il délimite, diminue de façon continue au fur et à mesure de l'abrasion de la couche extérieure de flanc.

Également de façon essentielle la paroi intérieure de l'indicateur d'usure fait contraste visuellement grâce à :
- soit des éléments en relief ou en creux par rapport à la paroi intérieure, tels que, par exemple et de manière non exhaustive, des stries,
- soit une texture en relief telle que, par exemple et de manière non exhaustive, une texture de type « velours » constituée de brins et/ou de lames, telle que décrite par exemple dans les documents WO 2007045425 et WO 2011036061,
- soit une combinaison des deux moyens précédents.

Ces deux types de moyens, présents sur la paroi intérieure, ont une double fonction :
- d'une part, permettre de déterminer, à tout niveau d'usure du flanc, la profondeur résiduelle de la cavité en creux constituant l'indicateur d'usure, c'est-à-dire l'épaisseur résiduelle de la couche extérieure de flanc en matériau caoutchoutique dans laquelle est creusé l'indicateur d'usure,
- et, d'autre part, garantir un bon contraste entre l'indicateur d'usure et la portion de flanc qui l'entoure, et, par conséquent, une meilleure visibilité de l'indicateur d'usure garantissant une meilleure fiabilité de la détermination de l'épaisseur résiduelle de couche extérieure de flanc.

Il est à noter que l'indicateur d'usure s'étend à partir d'une face extérieure de flanc à l'intérieur d'une couche extérieur de flanc comprenant un matériau caoutchoutique, sans atteindre l'armature de carcasse intérieure à ladite couche extérieure de flanc et constituée par des renfort métalliques ou textiles enrobés dans un matériau caoutchoutique. Ainsi lorsque le niveau d'abrasion du flanc atteint le fond de l'indicateur d'usure, l'armature de carcasse reste protégée des agressions extérieures par une pellicule de matériau caoutchoutique.

Encore selon l'invention, les éléments en relief ou en creux par rapport à la paroi intérieure sont des stries. Les stries présentent l'avantage de différencier visuellement la paroi intérieure de l'indicateur d'usure de la portion de flanc environnante, et de créer une discrétisation géométrique de la paroi permettant la mesure de l'évolution de la profondeur de la cavité.

Toujours selon l'invention, les stries en relief ou en creux par rapport à la paroi intérieure sont réparties radialement selon un pas permettant de déterminer la profondeur résiduelle de l'indicateur d'usure à un niveau d'usure du flanc donné. L'espacement entre deux stries consécutives permet ainsi de mesurer la variation d'épaisseur abrasée entre ces deux stries.

Selon un premier mode de réalisation préféré la section débouchante de tout indicateur d'usure a un contour circulaire, à l'état neuf du flanc. Un contour circulaire est une forme simple et robuste du point de vue de l'usure. Dans ce cas particulier le contour de la section débouchante est donc confondu avec le cercle inscrit. L'état neuf du flanc est l'état initial non abrasé du flanc, avant tout râpage et donc avant toute réduction de l'épaisseur de la couche extérieure de flanc.

Selon un deuxième mode de réalisation préféré la section débouchante de tout indicateur d'usure a un contour comprenant au moins deux lobes à l'état neuf du flanc. Un contour multilobé est une forme un peu plus différenciante visuellement qu'un contour circulaire.

Avantageusement la section débouchante de tout indicateur d'usure a une forme évolutive en fonction de l'usure du flanc. En d'autres termes, la forme du contour de la section débouchante évolue avec le niveau d'usure. Ainsi une forme de contour donnée peut correspondre à une épaisseur résiduelle donnée et ainsi la caractériser. Par exemple, à l'état neuf, le contour peut avoir une forme multilobée, et à mi-usure avoir une forme circulaire.

Avantageusement le diamètre du cercle inscrit dans la surface débouchante, à l'état neuf du flanc, est au moins égal à 10 mm. En dessous de 10 mm les moyens présents sur la paroi intérieure de l'indicateur d'usure, tels que les éléments en relief ou en creux ou la texture en relief deviennent moins visibles, au fur et à mesure de l'abrasion de la couche extérieure de flanc, car la dimension de la section débouchante diminue. Il en résulte une détermination plus difficile de l'épaisseur résiduelle de la couche extérieure de flanc.

Encore avantageusement le diamètre du cercle inscrit dans la surface débouchante, à l'état neuf du flanc, est au plus égal à 70 mm. Au-dessus de 70 mm, la section débouchante initiale devient trop importante et la taille de l'indicateur d'usure risque de sensibiliser localement le flanc en raison en raison d'un manque de matière trop important.

Selon une première variante d'un mode de réalisation de la paroi intérieure de l'indicateur d'usure, la texture de la paroi intérieure non lisse de l'indicateur d'usure comprend des brins. Selon le document WO 2011036061, typiquement et à titre d'exemple, le diamètre de la section moyenne d'un brin est compris entre 0.03 mm et 0.5 mm. La densité des brins est au moins égale à 5 brins/mm². La rugosité Rz de la texture constituée de brins est comprise entre 5 µm et 30 µm.

Selon une deuxième variante d'un mode de réalisation de la paroi intérieure de l'indicateur d'usure, la texture de la paroi intérieure non lisse de l'indicateur d'usure comprend des lames. Une lame de texture est le plus souvent de taille sensiblement à inférieure à celle des stries de paroi précédemment décrites. Le document WO 2011036061 décrit une texture composée d'une pluralité de lames sensiblement parallèles entre elles. Typiquement et à titre d'exemple, la largeur moyenne d'une lame est comprise entre 0.03 mm et 0.5 mm. Le pas entre 2 lames consécutives est au plus égal à 0.5 mm. La rugosité Rz de la texture constituée de lames est comprise entre 5 µm et 30 µm.

Avantageusement au moins un flanc comprend, sur une face extérieure de flanc au moins deux indicateurs d'usure en creux par rapport à la face extérieure de flanc. La présence d'au moins deux indicateurs d'usure permet de mesurer l'épaisseur résiduelle de couche extérieure de flanc en deux endroits différents et de faire une moyenne des mesures ainsi réalisées.

Encore avantageusement deux indicateurs d'usure consécutifs sont positionnés circonférentiellement selon des plans méridiens formant entre eux un angle au moins égal à 90°, pour avoir des mesures d'épaisseur résiduelle suffisamment réparties sur le pourtour du flanc.

Les caractéristiques de l'invention seront mieux comprises à l'aide des figures 1 à 6C, non représentées à l'échelle :
- Figure 1 : Vue en perspective d'un pneumatique pour bus urbain comprenant un indicateur d'usure conforme à l'invention
- Figure 2A : Vue en coupe méridienne d'un pneumatique pour bus urbain comprenant un indicateur d'usure conforme à l'invention
- Figure 2B : Vue en coupe méridienne d'une portion de flanc (détail A de la figure 2A)
- Figure 3 : Vue en coupe méridienne d'un indicateur d'usure conforme à l'invention
- Figure 4A : Vue de face d'un indicateur d'usure conforme à l'invention ayant une section débouchante à contour circulaire avec des stries circulaires concentriques en relief par rapport à la paroi intérieure
- Figure 4B : Vue de face d'un indicateur d'usure non-conforme à l'invention ayant une section débouchante à contour circulaire avec des stries rectilignes en relief par rapport à la paroi intérieure
- Figure 4C : Vue de face d'un indicateur d'usure non-conforme à l'invention ayant une section débouchante à contour circulaire avec une texture en relief sur le fond de la paroi intérieure
- Figure 4D : Vue de face d'un indicateur d'usure ayant une section débouchante à contour circulaire avec des stries circulaires concentriques en relief par rapport à la paroi intérieure et une texture entre les stries
- Figure 5A : Vue de face d'un indicateur d'usure ayant une section débouchante à contour multilobé (4 lobes)
- Figure 5B : Vue de face d'un indicateur d'usure à contour multilobé (4 lobes) avec une texture en relief sur le fond de la paroi intérieure
- Figure 6A : Vue de face d'un indicateur d'usure ayant une section débouchante à contour multilobé (4 lobes) à l'état neuf du flanc
- Figure 6B : Vue de face d'un indicateur d'usure ayant une section débouchante à contour multilobé (4 lobes) à un état d'usure partiel du flanc
- Figure 6C : Vue de face d'un indicateur d'usure ayant une section débouchante à contour multilobé (4 lobes) à un état d'usure partiel du flanc plus important que celui de la figure 6B.

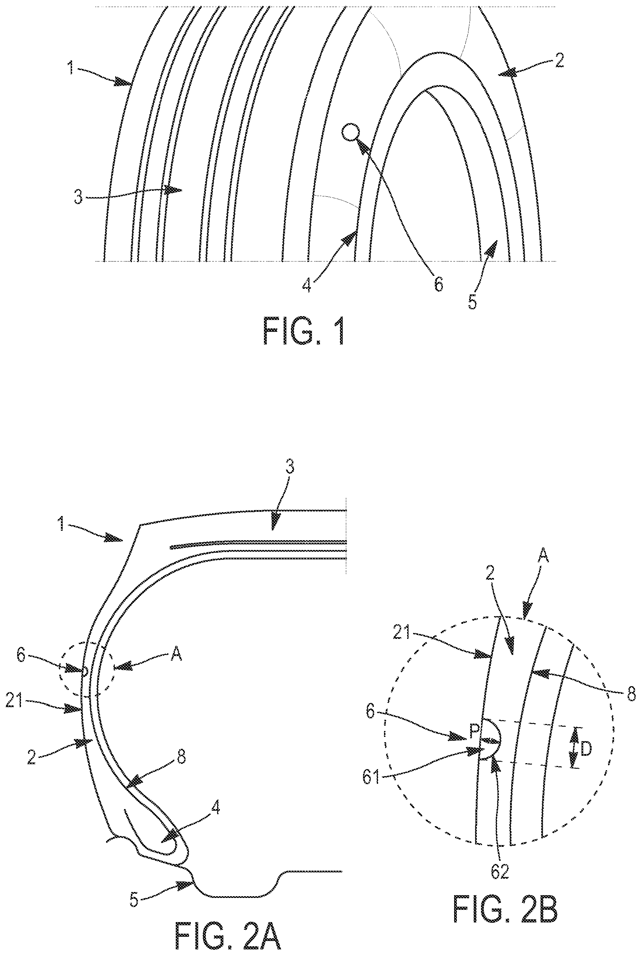

La figure 1 est une vue en perspective d'un pneumatique 1 pour bus urbain comprenant un indicateur d'usure 6 conforme à l'invention. Le pneumatique 1 comprend deux flancs 2 reliant une bande de roulement 3 destinée à entrer en contact avec un sol, respectivement à deux bourrelets 4, destinés à entrer en contact avec une jante 5.

La figure 2A est une vue en coupe méridienne d'un pneumatique 1 pour bus urbain comprenant un indicateur d'usure 6 conforme à l'invention. Cette vue représente une moitié de section méridienne de pneumatique. Le flanc 2 comprend, sur une face extérieure de flanc 21 en contact avec l'air atmosphérique, un indicateur d'usure 6 en creux dans une couche de matériau caoutchoutique axialement extérieure à une armature de couche de carcasse 8 s'enroulant dans chaque bourrelet 4 monté sur la jante 5. La figure 2B est une vue en coupe méridienne d'une portion de flanc 2 (détail A de la figure 2A), comprenant un indicateur d'usure 6 débouchant sur la face axialement extérieure de flanc 21, à l'état neuf du flanc 2. L'indicateur d'usure 6 a une section débouchante 61 sur la face extérieure de flanc 21, contenant un cercle inscrit de diamètre D et une paroi intérieure 62 s' étendant jusqu' à une profondeur P.

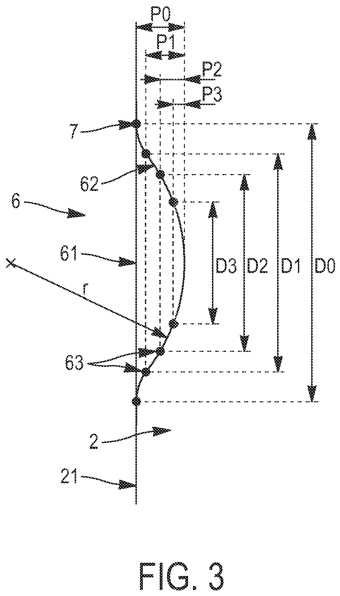

La figure 3 est une vue en coupe méridienne d'un indicateur d'usure 6 conforme à l'invention. Le profil méridien de l'exemple présenté est une portion de cercle de rayon r. L'indicateur d'usure 6 a une section débouchante 61 sur la face extérieure de flanc 21 contenant un cercle inscrit 7 dont le diamètre (D0, D1, D2, D3) décroît continûment avec l'usure du flanc 2, cette usure étant caractérisée par une profondeur (P0, P1, P2, P3) décroissante. L'indicateur d'usure 6 a une paroi intérieure 62 non lisse, comprenant une répartition d'éléments 63 en relief ou en creux par rapport à la paroi intérieure 62, de telle sorte que ladite paroi intérieure 62 fait contraste visuellement avec la face extérieure de flanc 21.

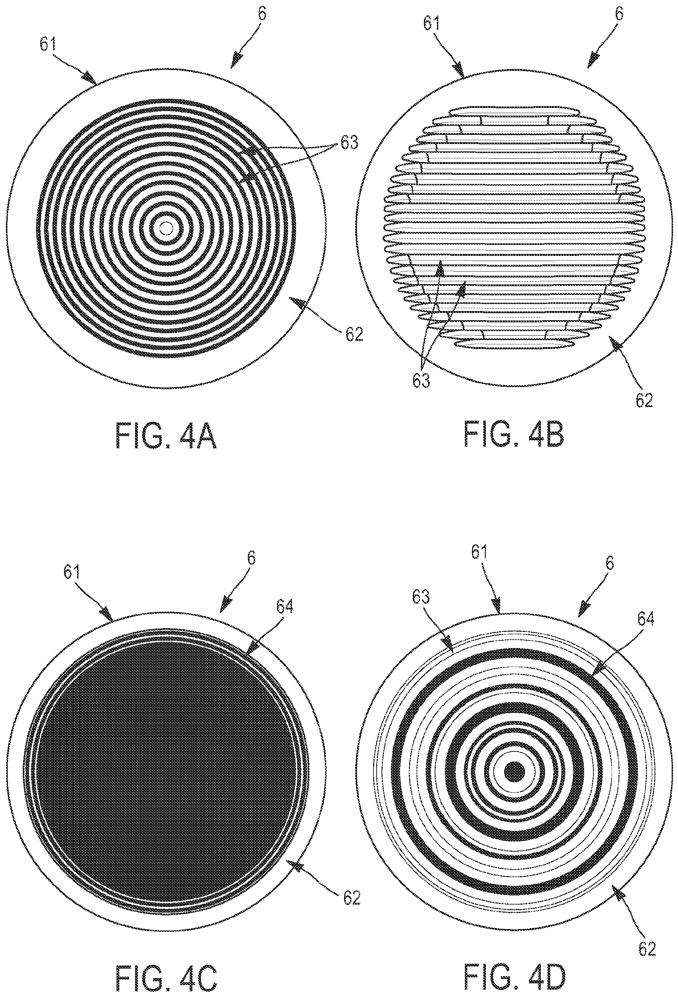

La figure 4A est une vue de face d'un indicateur d'usure 6 ayant une section débouchante 61 à contour circulaire avec des stries circulaires concentriques 63 en relief par rapport à la paroi intérieure 62. La figure 4B est une vue de face d'un indicateur d'usure 6 ayant une section débouchante 61 à contour circulaire avec des stries rectilignes 63 en relief par rapport à la paroi intérieure 62. La figure 4C est une vue de face d'un indicateur d'usure 6 ayant une section débouchante 61 à contour circulaire avec une texture 64 en relief sur le fond de la paroi intérieure 62. La figure 4D est une vue de face d'un indicateur d'usure 6 ayant une section débouchante 61 à contour circulaire combinant des stries circulaires concentriques 63 en relief par rapport à la paroi intérieure 62 et une texture 64 entre les stries.

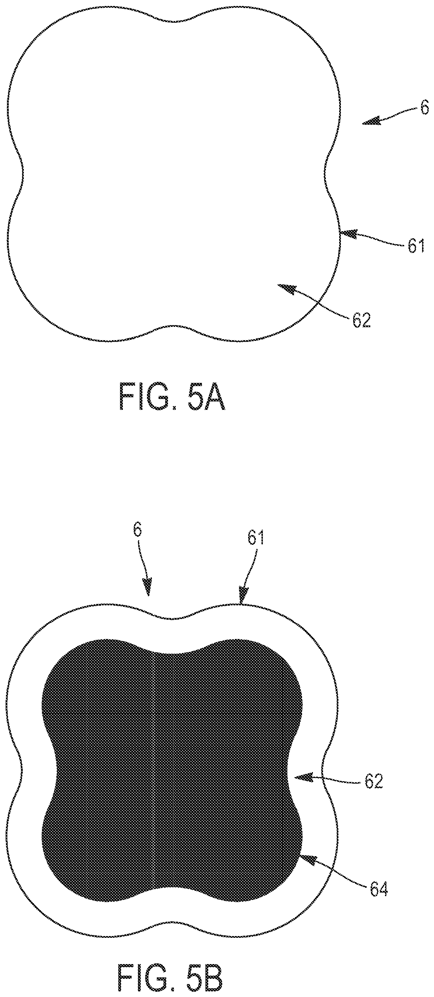

La figure 5A est une vue de face d'un indicateur d'usure 6 ayant une section débouchante 61 à contour multilobé (4 lobes) et une paroi intérieure 62. La figure 5B est une vue de face d'un indicateur d'usure 6 à contour multilobé (4 lobes) avec une texture 64 en relief sur le fond de la paroi intérieure 62.

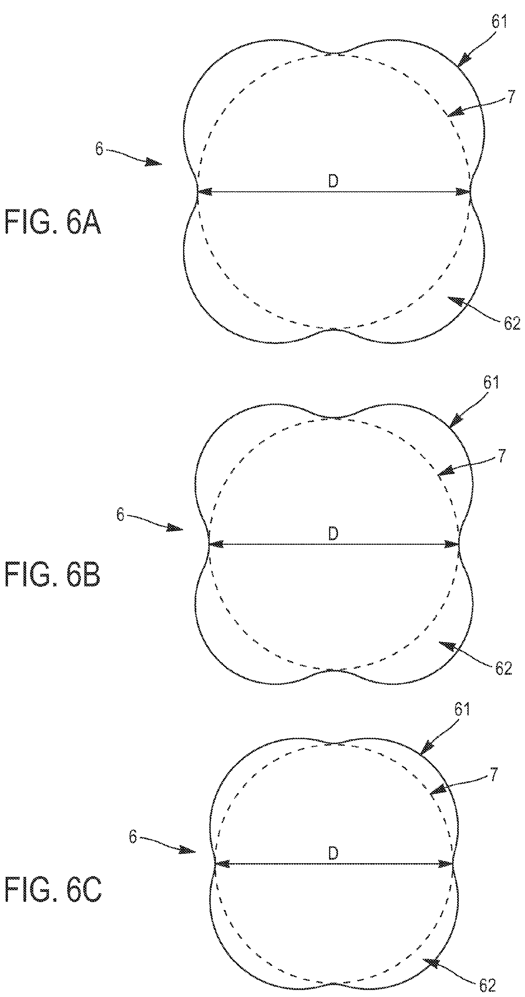

La figure 6A est une vue de face d'un indicateur d'usure 6 ayant une section débouchante 61 à contour multilobé (4 lobes) à l'état neuf du flanc, avant toute abrasion du flanc. La figure 6B est une vue de face d'un indicateur d'usure 6 ayant une section débouchante 61 à contour multilobé (4 lobes) à un état d'usure partiel du flanc. La figure 6C est une vue de face d'un indicateur d'usure 6 ayant une section débouchante 61 à contour multilobé (4 lobes) à un état d'usure partiel du flanc plus important que celui de la figure 6B.

L'invention a été plus particulièrement étudiée dans le cas d'un pneumatique de dimension 275/70R22.5 X Incity Michelin, destiné à équiper un bus urbain. Pour un tel pneumatique, la pression de gonflage recommandée est égale à 9 bars, la charge statique recommandée est égale à 3550 kg et la vitesse maximale recommandée est égale à 100 km/h.

Deux types d'indicateurs d'usure ont été testés : un premier type d'indicateur d'usure ayant une section débouchante avec un contour circulaire, et un deuxième type d'indicateur d'usure ayant une section débouchante avec un contour à 4 lobes. Dans les deux cas, à l'état neuf du flanc, le diamètre du cercle inscrit à la section débouchante est égal à 22 mm, et la profondeur de l'indicateur d'usure est égale à 5 mm. Le premier type comprend des stries circulaires, réparties selon un pas égal à 2 mm et ayant une hauteur égale à 0.5 mm et une épaisseur égale à 5 mm, et/ou comprend une texture. Le deuxième type comprend ou non une texture. Une analyse de ces indicateurs d'usure, à divers niveaux d'usure du flanc, en particulier à l'aide d'un système optique adapté a montré qu'ils garantissaient un bon contraste visuel par rapport au reste du flanc et permettaient une détermination fiable de la profondeur d'usure.

## Revendications

1. Pneumatique (1) pour véhicule lourd à usage urbain comprenant deux flancs (2) reliant une bande de roulement (3), destinée à entrer en contact avec un sol, respectivement à deux bourrelets (4), destinés à entrer en contact avec une jante (5),
- au moins un flanc (2) comprenant, sur une face extérieure de flanc (21) en contact avec l'air atmosphérique, au moins un indicateur d'usure (6) en creux par rapport à la face extérieure de flanc (21),
**caractérisé en ce que** tout indicateur d'usure (6) a une section débouchante (61) sur la face extérieure de flanc (21) contenant un cercle inscrit (7) dont le diamètre (D) décroît continûment avec l'usure du flanc (2),
**en ce que** tout indicateur d'usure (6) a une paroi intérieure (62) non lisse, comprenant une répartition d'éléments (63) en relief ou en creux par rapport à la paroi intérieure (62), et/ou une texture (64) en relief par rapport à la paroi intérieure (62), de telle sorte que ladite paroi intérieure (62) fait contraste visuellement avec la face extérieure de flanc (21),
**en ce que** les éléments (63) en relief ou en creux par rapport à la paroi intérieure (62) sont des stries,
**et en ce que** les stries (63) en relief ou en creux par rapport à la paroi intérieure (62) sont réparties radialement selon un pas permettant de déterminer la profondeur résiduelle de l'indicateur d'usure (6) à un niveau d'usure du flanc (2) donné.

2. Pneumatique (1) selon la revendication 1 **dans lequel** la section débouchante (61) de tout indicateur d'usure (6) a un contour circulaire, à l'état neuf du flanc (2).

3. Pneumatique (1) selon la revendication 1 **dans lequel** la section débouchante (61) de tout indicateur d'usure (6) a un contour comprenant au moins deux lobes à l'état neuf du flanc (2).

4. Pneumatique (1) selon l'une quelconque des revendications 1 à 3 **dans lequel** la section débouchante (61) de tout indicateur d'usure (6) a une forme évolutive en fonction de l'usure du flanc (2).

5. Pneumatique (1) selon l'une quelconque des revendications 1 à 4 **dans lequel** le diamètre (D) du cercle inscrit (7) dans la surface débouchante (61), à l'état neuf du flanc, est au moins égal à 10 mm.

6. Pneumatique (1) selon l'une quelconque des revendications 1 à 5 **dans lequel** le diamètre (D) du cercle inscrit (7) dans la surface débouchante (61), à l'état neuf du flanc, est au plus égal à 70 mm.

7. Pneumatique (1) selon l'une quelconque des revendications 1 à 6 **dans lequel** la texture (64) de la paroi intérieure (62) non lisse de l'indicateur d'usure (6) comprend des brins.

8. Pneumatique (1) selon l'une quelconque des revendications 1 à 7 **dans lequel** la texture (64) de la paroi intérieure (62) non lisse de l'indicateur d'usure (6) comprend des lames.

9. Pneumatique (1) selon l'une quelconque des revendications 1 à 8 **dans lequel** au moins un flanc (2) comprend, sur une face extérieure de flanc (21) au moins deux indicateurs d'usure (6) en creux par rapport à la face extérieure de flanc (21).

## Patentansprüche

1. Reifen (1) für ein in der Stadt eingesetztes Schwerlastfahrzeug, welcher zwei Seitenwände (2) umfasst, die einen Laufstreifen (3), der dazu bestimmt ist, mit einem Boden in Kontakt zu kommen, mit jeweils einem von zwei Wülsten (4) verbinden, die dazu bestimmt sind, mit einer Felge (5) in Kontakt zu kommen,
- wobei mindestens eine Seitenwand (2) auf einer Seitenwandaußenseite (21), die sich mit der atmosphärischen Luft in Kontakt befindet, mindestens eine Verschleißanzeige (6) umfasst, die in Bezug auf die Seitenwandaußenseite (21) vertieft ist,
**dadurch gekennzeichnet, dass** jede Verschleißanzeige (6) einen auf der Seitenwandaußenseite (21) mündenden Querschnitt (61) umfasst, der einen einbeschriebenen Kreis (7) enthält, dessen Durchmesser (D) sich mit dem Verschleiß der Seitenwand (2) kontinuierlich verringert, dadurch, dass jede Verschleißanzeige (6) eine nicht glatte Innenwand (62) aufweist, die eine Verteilung von Elementen (63) umfasst, die in Bezug auf die Innenwand (62) vorstehen oder vertieft sind, und/oder eine Texturierung (64), die in Bezug auf die Innenwand (62) vorsteht, derart, dass die Innenwand (62) einen visuellen Kontrast zu der Seitenwandaußenseite (21) bildet,
dadurch, dass die Elemente (63), die in Bezug auf die Innenwand (62) vorstehen oder vertieft sind, Streifen sind,
und dadurch, dass die Streifen (63), die in Bezug auf die Innenwand (62) vorstehen oder vertieft sind, mit einer Schrittweite radial verteilt sind, die es ermöglicht, die Resttiefe der Verschleißanzeige (6) bei einem gegebenen Verschleißniveau der Seitenwand (2) zu bestimmen.

2. Reifen (1) nach Anspruch 1, wobei der mündende Querschnitt (61) jeder Verschleißanzeige (6) im Neuzustand der Seitenwand (2) eine kreisförmige Kontur aufweist.

3. Reifen (1) nach Anspruch 1, wobei der mündende Querschnitt (61) jeder Verschleißanzeige (6) im Neuzustand der Seitenwand (2) eine Kontur aufweist, die mindestens zwei Zipfel umfasst.

4. Reifen (1) nach einem der Ansprüche 1 bis 3, wobei der mündende Querschnitt (61) jeder Verschleißanzeige (6) eine sich in Abhängigkeit vom Verschleiß der Seitenwand (2) verändernde Form aufweist.

5. Reifen (1) nach einem der Ansprüche 1 bis 4, wobei der Durchmesser(D) des in dem mündenden Querschnitt (61) einbeschriebenen Kreises (7) im Neuzustand der Seitenwand mindestens 10 mm beträgt.

6. Reifen (1) nach einem der Ansprüche 1 bis 5, wobei der Durchmesser(D) des in dem mündenden Querschnitt (61) einbeschriebenen Kreises (7) im Neuzustand der Seitenwand höchstens 70 mm beträgt.

7. Reifen (1) nach einem der Ansprüche 1 bis 6, wobei die Texturierung (64) der nicht glatten Innenwand (62) der Verschleißanzeige (6) Fasern umfasst.

8. Reifen (1) nach einem der Ansprüche 1 bis 7, wobei die Texturierung (64) der nicht glatten Innenwand (62) der Verschleißanzeige (6) Lamellen umfasst.

9. Reifen (1) nach einem der Ansprüche 1 bis 8, wobei mindestens eine Seitenwand (2) auf einer Seitenwandaußenseite (21) mindestens zwei Verschleißanzeigen (6) umfasst, die in Bezug auf die Seitenwandaußenseite (21) vertieft sind.

## Claims

1. Tyre (1) for a heavy vehicle intended for urban use comprising two sidewalls (2) connecting a tread (3), which is designed to come into contact with the ground, respectively to two beads (4), which are designed to come into contact with a rim (5),
- at least one sidewall (2) comprising, on an outer face (21) of the sidewall in contact with the atmospheric air, at least one wear indicator (6) recessed relative to the outer face (21) of the sidewall,
**characterized in that** each wear indicator (6) has an open section (61) on the outer face (21) of the sidewall containing an inscribed circle (7), the diameter (D) of which decreases continuously as the sidewall (2) wears down,
**in that** each wear indicator (6) has a non-smooth inner wall (62), comprising a distribution of elements (63) raised or recessed relative to the inner wall (62), and/or a texture (64) raised relative to the inner wall (62), such that said inner wall (62) contrasts visually with the outer face (21) of the sidewall,
**in that** the elements (63) raised or recessed relative to the inner wall (62) are grooves,
**and in that** the grooves (63) raised or recessed relative to the inner wall (62) are distributed radially at a pitch enabling the residual depth of the wear indicator (6) to be determined at a given wear level of the sidewall (2).

2. Tyre (1) according to Claim 1, **in which** the open section (61) of each wear indicator (6) has a circular contour when the sidewall (2) is new.

3. Tyre (1) according to Claim 1, **in which** the open section (61) of each wear indicator (6) has a contour comprising at least two lobes when the sidewall (2) is new.

4. Tyre (1) according to any one of Claims 1 to 3, **in which** the shape of the open section (61) of each wear indicator (6) changes as the sidewall (2) wears down.

5. Tyre (1) according to any one of Claims 1 to 4, **in which** the diameter (D) of the inscribed circle (7) in the open section (61) is at least 10 mm when the sidewall is new.

6. Tyre (1) according to any one of Claims 1 to 5, **in which** the diameter (D) of the inscribed circle (7) in the open section (61) is at most 70 mm when the sidewall is new.

7. Tyre (1) according to any one of Claims 1 to 6, **in which** the texture (64) of the non-smooth inner wall (62) of the wear indicator (6) comprises plies.

8. Tyre (1) according to any one of Claims 1 to 7, **in which** the texture (64) of the non-smooth inner wall (62) of the wear indicator (6) comprises strips.

9. Tyre (1) according to any one of Claims 1 to 8, **in which** at least one sidewall (2) has at least two wear indicators (6) on an outer face (21) of the sidewall that are recessed relative to the outer face (21) of the sidewall.
